## Europäisches Patentamt
## European Patent Office
## Office européen des brevets

(19)

(11) Veröffentlichungsnummer : **0 037 010
B1**

(12)

# EUROPÄISCHE PATENTSCHRIFT

(45) Veröffentlichungstag der Patentschrift :
05.10.83

(51) Int. Cl.³ : **C 08 G 65/28, C 08 G 18/48**

(21) Anmeldenummer : **81102008.0**

(22) Anmeldetag : **18.03.81**

(54) **Verfahren zur Herstellung von Polyetherpolyolen und deren Verwendung in einem Verfahren zur Herstellung von starren Polyurethanschaumstoffen.**

(30) Priorität : **28.03.80 DE 3012001**

(43) Veröffentlichungstag der Anmeldung :
**07.10.81 Patentblatt 81/40**

(45) Bekanntmachung des Hinweises auf die Patenterteilung : **05.10.83 Patentblatt 83/40**

(84) Benannte Vertragsstaaten :
**BE DE FR GB IT NL**

(56) Entgegenhaltungen :
**EP A 0 001 389
DE A 2 639 083
FR A 1 286 983
FR A 2 269 550**

(73) Patentinhaber : **BAYER AG
Zentralbereich Patente, Marken und Lizenzen
D-5090 Leverkusen 1, Bayerwerk (DE)**

(72) Erfinder : **Müller, Hanns Peter, Dr.
St.Pankratiusstrasse 2
D-5068 Odenthal (DE)**
Erfinder : **Sommerfeld, Claus Dieter, Dr.
1404 Old Meadow Road
Pittsburgh PA 15241 (US)**
Erfinder : **Becker, Gernot, Dr.
Goethestrasse 57 d
D-4047 Dormagen 1 (DE)**

Verfahren zur Herstellung von Polyetherpolyolen und deren Verwendung in einem Verfahren
zur Herstellung von starren Polyurethanschaumstoffen

Die vorliegende Erfindung betrifft neuartige Polyetherpolyole auf Basis von Saccharose und Formit, die relativ niedrige Viskosität aufweisen und insbesondere als Ausgangsmaterialien für die Herstellung von starren, geschlossenzelligen Polyurethan-Hartschaumstoffen geeignet sind.

Polyurethanschaumstoffe dieser Art werden im allgemeinen durch Umsetzen eines Polyetherpolyols mit einem aromatischen Polyisocyanat, beispielsweise rohem 4,4'-Diisocyanatodiphenylmethan, erhalten und eignen sich insbesondere für die Herstellung von Isoliermaterialien, Sandwichstrukturen, Vertäfelungen für Gebäude und von zahlreichen anderen Bauelementen. Die physikalischen und mechanischen Eigenschaften dieser Schaumstoffe hängen im wesentlichen vom Aufbau und der Molekülgröße der verwendeten Polyether ab. Zum Stande der Technik gehören Polyether, die sich von dreiwertigen Alkoholen wie Trimethylolpropan oder Glycerin ableiten. Polyurethanschaumstoffe, die unter Verwendung solcher Polyether hergestellt werden, besitzen jedoch eine schlechte Dimensionsstabilität. Durch Erhöhen des Vernetzungsgrades konnte die Qualität solcher starrer Polyurethanschaumstoffe zwar verbessert werden, jedoch sind auch die auf diese Weise erhaltenen Produkte nicht völlig zufriedenstellend.

Ein vielfach beschrittener Weg zur Herstellung verbesserter Polyurethan-Hartschaumstoffe ist die Verwendung von hochfunktionellen Polyetherpolyolen auf Basis von Rohrzucker. Die bisher üblichen Produktionsverfahren für solche Saccharose-Polyether sind jedoch mit einer Reihe von technischen Problemen verbunden.

Es ist seit langem bekannt, Saccharose mit Alkylenoxiden in wäßriger Lösung in Gegenwart von Natriumhydroxid mit Ethylenoxid zu Saccharosehydroxyalkylethern umzusetzen (J. W. Le Maistre, R. B. Seymour, J. org. Chem. 13, 782 (1948)). Auf dieser Reaktion basiert ein Verfahren zur Herstellung von Saccharosehydroxyalkylethern, bei dem Saccharose bei erhöhter Temperatur in konzentrierter, wäßriger Lösung in Gegenwart von Kaliumhydroxid als Katalysator mit Ethylenoxid oder Propylenoxid umgesetzt wird (US-Patentschriften 3 055 085 und 3 153 002, deutsche Patentschrift 1 443 026).

Bei der Umsetzung von Saccharose mit Alkylenoxiden in wäßriger Lösung finden jedoch unerwünschte Nebenreaktionen statt, beispielsweise die teilweise Hydrolyse des Alkylenoxids durch das als Reaktionsmedium verwendete Wasser. Das hydrolysierte Alkylenoxid, die daraus durch Reaktion mit weiterem Alkylenoxid gebildeten Polyalkylenglykole und die anderen entstandenen Nebenprodukte, die eine starke Dunkelfärbung des Reaktionsgemisches verursachen, wirken sich nachteilig auf die Eigenschaften der aus solchen Saccharosehydroxyalkylethern hergestellten Polyurethanschäume aus. Der hohe Anteil an bifunktionellen, linearen Nebenprodukten hat zur Folge, daß die Funktionalität dieser Polyether gegenüber der Funktionalität eines reinen Saccharosepolyols sehr stark erniedrigt ist. Wegen des hohen Anteils an bifunktionellen, linearen Nebenprodukten sind die so hergestellten Saccharosepolyether zur Herstellung wertvoller Polyurethanschaumstoffe nur bedingt geeignet, ihre Verwendung führt vielmehr zu brüchigen Schäumen mäßiger Festigkeit und uneinheitlicher Zellstruktur. Ein weiterer Nachteil der aus solchen Saccharosepolyethern erhaltenen Polyurethanschaumstoffe ist ihr geringer Anteil an geschlossenen Zellen und ihr hiermit in Zusammenhang stehendes schlechtes Wärmeisolationsvermögen.

Aus diesen Gründen wurde bereits versucht, die Alkoxylierung von Saccharose in Abwesenheit von Wasser und in Gegenwart von Xylol durchzuführen (US-Patentschrift 2 652 394). Bei diesem Verfahren entstehen jedoch durch Karamelisierung bzw. Verkohlung der Saccharose stark verfärbte Produkte.

Die Bildung von hohen Anteilen an bifunktionellen Nebenprodukten kann durch ein Verfahren vermindert werden, bei dem in einer ersten Stufe Saccharose in konzentrierter, wäßriger Lösung in Gegenwart von Kalilauge mit 4 bis 8 Mol Alkylenoxid umgesetzt wird ; danach wird nahezu das gesamte Wasser aus dem Reaktionsgemisch entfernt und anschließend wird die Zugabe von Alkylenoxid fortgesetzt (Deutsche Patentschrift 1 413 022). Da ein großer Teil des Alkylenoxids auch bei diesem Verfahren in Gegenwart relativ hoher Anteile an Wasser im Reaktionsgemisch zur Umsetzung gebracht wird, treten auch hier die schon für das Verfahren der Alkoxylierung ohne zwischengeschaltete Entwässerung beschriebenen Nachteile in nicht geringem Umfang auf. Ein für die großtechnische Produktion wesentlicher Nachteil der bekannten Verfahren, bei denen Saccharose in wäßriger Lösung mit Alkylenoxiden umgesetzt wird, ist ferner, daß die Hauptmenge des Zuckers bei Temperaturen zugegeben werden muß, die um den Siedepunkt oder nur wenig unter dem Siedepunkt des Wassers liegen. Ein weiterer Nachteil dieser Verfahren ist, daß die Geschwindigkeit der Alkylenoxidadditionsreaktion relativ niedrig ist, wodurch die Bildung von Nebenprodukten sehr stark begünstigt wird.

Die Kombination der geforderten Eigenschaften für starre Polyurethanschaumstoffe (Feinzelligkeit, Dimensionsstabilität in feuchter Hitze und in der Kälte) mit hervorragendem Fließverhalten beim Verschäumungsvorgang und dem gewünschten Aushärteverhalten (insbesondere Aushärtegeschwindigkeit und Ausbildung einer zähen Randzone mit optimaler Haftung an Deckschichten) kann im übrigen durch die Verwendung bisher bekannt gewordener Polyätherpolyole auf Basis von Rohrzucker, Rohrzucker-Glycerin-Mischungen oder Sorbit als Startermaterialien nicht erreicht werden.

In US-PS 2 990 376 wird darauf hingewiesen, daß durch Zusatz beschränkter Mengen an einem speziellen Rohrzuckerpolyether zu einem Glycerinpolyether ein Polyol erhalten wurde, das sich für die Herstellung von starren Polyurethanschaumstoffen eignete. In der DE-AS 1 285 741 wird ein verbessertes Verfahren zur Herstellung von starren Polyurethankunststoffen vorgeschlagen, bei welchem Polyether verwendet werden, die ein ganz bestimmtes Mengenverhältnis von Rohrzucker und Glycerin enthalten. Die aus diesen Polyethern resultierenden Schaumstoffe zeigen zwar gute Dimensionsstabilität, weisen aber nicht gleichzeitig die anderen oben genannten geforderten Eigenschaften auf (insbesondere kurze Formstandzeiten und die Ausbildung von zähen Oberflächen mit hervorragender Haftung an Deckschichten). Weiterhin erscheint die Verwendung von relativ teurem Glycerin als Startermaterial für Polyether aus wirtschaftlichen Gründen nicht mehr angezeigt.

Die Herstellung und Verwendung von Formit-Polyethern ist Gegenstand von DE-OS 2 639 083. Polyether, welche nach diesem Verfahren hergestellt wurden, unterscheiden sich zwar von Saccharose-Polyethern und Glyceringestarteten Polyethern in vorteilhafter Weise, insbesondere durch die verbesserte Fließfähigkeit. Bei der Herstellung der Polyurethanschaumstoffe erfüllen sie jedoch auch nicht alle vom Verarbeiter geforderten guten Eigenschaften (s. unten die Vergleichsbeispiele 10 bis 16).

Aufgabe der vorliegenden Erfindung ist es, die geschilderten Nachteile zu vermeiden und darüber hinaus in technisch einfacher Weise Polyetherpolyole zur Verfügung zu stellen, welche sich zu starren Polyurethanschaumstoffen verarbeiten lassen, die dann die Kombination der geforderten guten Eigenschaften aufweisen.

Dieses Ziel kann überraschenderweise erreicht werden, wenn man Polyetherpolyole verwendet, welche auf Mischungen aus Rohrzucker und niedermolekularen Polyolen gestartet wurde, die durch Reduktion von Gemischen von Hydroxyaldehyden und Hydroxyketonen (« Formose ») erhalten worden sind, wie sie bei der Selbstkondensation von Formaldehydhydrat in Gegenwart von Metallverbindungen als Katalysator und von zur Endiolbildung befähigten Verbindungen als Co-Katalysator entstehen (s. z. B. DE-Offenlegungsschriften 2 639 083, 2 639 084, 2 714 084, 2 714 104, 2 721 186, 2 721 093, 2 732 077, 2 738 154, 2 738 512, 2 756 270, 2 808 228 und 2 831 659).

Gegenstand der vorliegenden Erfindung ist somit ein Verfahren zur Herstellung von Polyetherpolyolen mit einer mittleren Hydroxylfunktionalität von mindestens 3, vorzugsweise von 4 bis 7, und einer Hydroxylzahl von 28 bis 1 000, vorzugsweise 200 bis 800, insbesondere von 300 bis 600, durch Alkoxylierung eines Startergemischs aus Saccharose, einem niedermolekularen Polyol und gegebenenfalls Wasser, welches dadurch gekennzeichnet ist, daß als Startermaterial ein Gemisch aus

a) 20 bis 80 Gew.-%, vorzugsweise 40 bis 75 Gew.-%, bezogen auf die Summe aus a) und b), an Saccharose und

b) 80 bis 20 Gew.-%, vorzugsweise 60 bis 25 Gew.-%, bezogen auf die Summe aus a) und b), an Formit mit einer mittleren Hydroxylfunktionalität von mindestens 3, vorzugsweise von 3,3 bis 5,7, eingesetzt wird.

Die für das erfindungsgemäße Verfahren geeigneten Formite werden, wie schon erwähnt, auf an sich bekannte Weise durch Reduktion (im allgemeinen durch Hydrierung) von Formose erhalten. Sie sind Gemische mehrwertiger Alkohole die sich durch die allgemeine Summenformel

$$C_nH_{2n-2}O_n$$

darstellen lassen, wobei n eine ganze Zahl $\geqslant$ 2 darstellt (Polyole mit n > 10 sind im Formit in der Regel allenfalls noch im Spuren nachweisbar) und einen mittleren Wert (Zahlenmittel) von mindestens 3 (im allgemeinen zwischen 3 und 6, vorzugsweise zwischen 3,3 und 5,7) aufweist.

Die Formite weisen in der Regel folgende Zusammensetzung auf :

n = 2 : 0,1 bis 40 Gew.-%, vorzugsweise 1 bis 15 Gew.-%
n = 3 : 0,2 bis 30 Gew.-%, vorzugsweise 3 bis 27 Gew.-%
n = 4 : 0,2 bis 40 Gew.-%, vorzugsweise 6 bis 30 Gew.-%
n = 5 : 1,0 bis 40 Gew.-%, vorzugsweise 6 bis 35 Gew.-%
n = 6 : 0,1 bis 50 Gew.-%, vorzugsweise 5 bis 40 Gew.-%
n = 7 : 0,1 bis 50 Gew.-%, vorzugsweise 2 bis 25 Gew.-%

Im erfindungsgemäßen Verfahren enthält das Startermaterial vorzugsweise zusätzlich Wasser in einer Menge von 0,5 bis 3 Gew.-Teilen, bezogen auf 100 Teile a) und b).

Erfindungsgemäß bevorzugt ist es ferner, daß das Startermaterial zusätzlich 2 bis 20 Gew.-Teile, bezogen auf 100 Teile a) und b), eines niedermolekularen höherwertigen Alkohols und/oder Monoamins und/oder Polyamins enthält.

Gegenstand der vorliegenden Erfindung ist ferner die Verwendung der Saccharose/Formit-Polyalkylenglykolpolyether für die Umsetzung mit Polyisocyanaten nach an sich bekannten Verfahren zur Herstellung von Polyurethan-Hartschaumstoffen mit hoher Oberflächenzähigkeit und kurzen Formverweilzeiten.

Bei der Durchführung des erfindungsgemäßen Verfahrens wird vorzugsweise folgendermaßen verfahren :

Saccharose wird mit Formit in den beanspruchten Gewichtsverhältnissen gemischt und zunächst bei Raumtemperatur in einem aromatischen Kohlenwasserstoff als Lösungsmittel suspendiert, wobei das Kohlenwasserstofflösungsmittel in einer Menge eingesetzt wird, die 40 bis 150, vorzugsweise 50 bis 100 Gew.-%, des Starters ausmacht.

Unter Stickstoffatmosphäre wird in diese Suspension bei Temperaturen zwischen 20 und 110 °C, vorzugsweise zwischen 50 und 90 °C, gegebenenfalls eine im Vergleich zum Anteil des Zucker/Formitgemisches kleine Menge eines wasserlöslichen, kurzkettigen Polyols, Mono- oder Polyamins, gegebenenfalls eine kleine Menge Wasser und als Katalysator eine geringe Menge Alkalihydroxid in beliebiger Reihenfolge zugesetzt, wobei das Alkalihydroxid vorzugsweise in Form einer konzentrierten wäßrigen Lauge eingesetzt wird. Das so erhaltene, gut rührbare, breiige Gemisch wird dann auf die Reaktionstemperatur von 85 bis 130 °C, vorzugsweise 95 bis 115 °C, erhitzt und anschließend bei Drücken von 0,3 bis 4,0 bar, vorzugsweise 0,5 bis 2,5 bar, mit dem Alkylenoxid zur Reaktion gebracht. Je nach Erfordernis wird durch Heizen oder Kühlen des Reaktionsgemisches die Reaktionstemperatur im Bereich von 85 bis 130 °C, vorzugsweise 95 bis 115 °C, gehalten. Nach beendeter Alkylenoxidaddition wird das alkalische Polymerisat mit verdünnter Mineralsäure neutralisiert. Dem neutralisierten Produkt wird gegebenenfalls ein Antioxidans, wie z. B. 2,6-Di-tert.-butyl-p-kresol, zugesetzt. Wasser und Kohlenwasserstoff werden im Vakuum bei erhöhter Temperatur — ca. 50 bis 130 °C — bis auf einen geringen Restgehalt abdestilliert, die dabei abgeschiedenen Salze werden durch Filtrieren entfernt.

Beim erfindungsgemäßen Verfahren können beliebige aromaitsche Kohlenwasserstoff-Lösungsmittel des Siedebereichs 80 bis 180 °C eingesetzt werden. Derartige Lösungsmittel sind z. B. Benzol, Toluol, Ethylbenzol, Xylole und Chlorbenzol. Bevorzugt wird beim erfindungsgemäßen Verfahren Toluol als Lösungsmittel verwendet. Die aromatischen Kohlenwasserstoffe können auch im Gemisch mit aliphatischen Lösungsmitteln des Siedebereichs 80 bis 180 °C eingesetzt werden.

Bei den im erfindungsgemäßen Verfahren gegebenenfalls zusätzlich einzusetzenden Polyolen, Mono- und/oder Polyaminen handelt es sich vorzugsweise um wasserlösliche Verbindungen mit einem unter 100 °C liegenden Schmelzpunkt und einem im allgemeinen zwischen 60 und 250 liegenden Molekulargewicht. Beispiele derartiger Verbindungen sind Ethylenglykol, Propylenglykol, Butandiol-1,4, Diethylenglykol, Dipropylenglykol, Trimethylolpropan, Glycerin, Sorbit, Mannit, Mono-, Di- und Triethanolamin, Mono-, Di- und Triisopropanolamin, N-Alkylalkanolamine, wie N-Methyl-diethanolamin und N-Ethyl-diethanolamin, niedere aliphatische Mono- und Dialkylamine, Cycloalkylamine, Aralkylamine, Alkylendiamine wie Ethylendiamin und Polyalkylenpolyamine wie Diethylentriamin und Triethylentetramin. Bevorzugt werden beim erfindungsgemäßen Verfahren Ethylenglykol, Propylenglykol bzw. Aminoalkohole eingesetzt.

Neben den reinen Verbindungen können auch Gemische von zwei oder mehr der beschriebenen Zusatzstoffe eingesetzt werden, wobei in beiden Fällen die Gesamtmenge der Zusatzstoffe 2 bis 20 %, vorzugsweise 3 bis 15 %, des Gewichts des Saccharose/Formit-Anteils beträgt.

Der Wassergehalt der Mischung von Saccharose/Formit, Zusatzstoffen und Katalysator liegt erfindungsgemäß vorzugsweise zwischen 0,5 und 3 %, insbesondere zwischen 0,6 und 2 %, des Gewichts des Saccharose/Formit-Anteils.

Die Umsetzung des Alkylenoxids wird in der Regel in Gegenwart von Alkalihydroxiden als Katalysatoren, vorzugsweise Natriumhydroxid oder Kaliumhydroxid, durchgeführt. In einer bevorzugten Ausführungsform wird Kaliumhydroxid als ca. 50 %ige, wäßrige Lösung eingesetzt, wobei die Menge an Kaliumhydroxid zwischen 1,0 und 5,0, vorzugsweise zwischen 2,0 und 3,0 %, des Gewichts des Saccharose/Formit-Anteils beträgt.

Beim erfindungsgemäßen Verfahren werden als Alkylenoxide vorzugsweise Ethylenoxid, Propylenoxid und/oder 1,2-Butylenoxid eingesetzt. Die erfindungsgemäße Alkoxylierungsreaktion kann sowohl unter ausschließlicher Verwendung eines einzigen der genannten Alkylenoxide als auch unter Verwendung von beliebigen Gemischen der Alkylenoxide durchgeführt werden. Es ist auch möglich, beim erfindungsgemäßen Verfahren verschiedene Alkylenoxide nacheinander in einem Reaktionsansatz zur Herstellung von sogenannten Blockcopolyethern einzusetzen.

Die Reaktionstemperaturen können in einem größeren Bereich variiert werden. Im allgemeinen arbeitet man zwischen 85 und 130 °C, vorzugsweise zwischen 95 und 115 °C. Die Umsetzung der Alkylenoxide wird bei erhöhtem Druck, im allgemeinen zwischen 0,3 und 4,0 bar, vorzugsweise zwischen 0,5 und 2,5 bar Überdruck, durchgeführt.

Zur Herstellung von Polyethern nach dem erfindungsgemäßen Verfahren wird die Menge an Alkylenoxid in der Regel so gewählt, daß jedes Startermolekül im Mittel mit etwa 4 bis 20, vorzugsweise mit etwa 8 bis 15 Molekülen, des Alkylenoxids zur Reaktion gebracht wird. Die erhaltenen Polyether besitzen meist Hydroxylzahlen zwischen 200 und 800, vorzugsweise zwischen 300 und 600.

Wie schon erwähnt, bewirken die erfindungsgemäßen Polyetherpolyole überraschenderweise hervorragende mechanische Eigenschaften daraus hergestellter Polyurethankunststoffe (insbesondere Oberflächenzähigkeit bei Hartschaumstoffen). Relativ hochfunktionelle, auf Zucker/Polyol-Gemischen gestartete Polyether lassen sich nach konventionellen Verfahren, wenn überhaupt, nur mit erheblichem technischem Aufwand herstellen und sind meist sehr hochviskos und wegen ihres Gehaltes an Nebenprodukten verbräunt.

Die erfindungsgemäß hergestellten Polyether sind demgegenüber klare bis gelbliche, dünnflüssige oder auch zähflüssige Öle. Die Viskosität der Produkte liegt — je nach Hydroxylzahl und Gehalt an Zusatzstoffen — zwischen 300 und 36 000 mPas/25 °C (bei niedrigen Hydroxylzahlen von etwa 350) bzw. zwischen 1 000 bis 1 000 000 mPas/25 °C (bei höheren Hydroxylzahlen um 550). Durch Variation der Hydroxylzahl und des Anteils an Zusatzstoffen — weniger durch Variation des geringen Wassergehalts —

können Produkte hergestellt werden, deren Viskosität dem jeweiligen Einsatzzweck optimal angepaßt ist.

Die nach dem erfindungsgemäßen Verfahren erhaltenen Saccharose/Formit-Polyether sind insbesondere wertvolle Ausgangsmaterialien zur Herstellung von Polyurethanhartschaumstoffen nach an sich bekannten Verfahren durch Umsetzung mit vorzugsweise aromatischen Polyisocyanaten in Gegenwart der üblichen Hilfs- und Zusatzmittel. Die so erhaltenen Schaumstoffe weisen die Kombination der vom Verarbeiter geforderten guten Eigenschaften auf.

Für die erfindungsgemäße Herstellung von Polyurethankunststoffen geeignete Polyisocyanate, gegebenenfalls zusätzliche höhermolekulare und/oder niedermolekulare Verbindungen sowie gegebenenfalls Aktivatoren, Stabilisatoren, Treibmittel und weitere an sich bekannte Zusatzstoffe sind den o. g. Druckschriften sowie auch den DE-Offenlegungsschriften 2 738 513, 2 738 532 und 2 738 533 zu entnehmen.

Zur Durchführung der nachstehenden Alkoxylierungsbeispiele diente ein Autoklav, der mit einer Heiz- und Kühlvorrichtung, einem Rührwerk, einer Einrichtung zum Verdrängen der Luft durch Stickstoffgas (z. B. Vakuumanschluß und Stickstoffzuleitung) und einer Vorrichtung zur Dosierung des Alkylenoxids versehen war.

Die folgenden Beispiele erläutern das erfindungsgemäße Verfahren. Wenn nicht anders vermerkt, sind Mengenangaben als Gewichtsteile bzw. Gewichtsprozente zu verstehen.

### Beispiel 1

640 g eines Formits folgender Zusammensetzung :

| | |
|---|---|
| zweiwertige Alkohole | 6,88 Gew.-% |
| dreiwertige Alkohole | 23,55 Gew.-% |
| vierwertige Alkohole | 22,9 Gew.-% |
| fünfwertige Alkohole | 16,6 Gew.-% |
| sechswertige Alkohole | 18,08 Gew.-% |
| siebenwertige Alkohole und höherwertige Alkohole | 11,99 Gew.-% |
| (mittlere Hydroxylfunktionalität : 4,01) | |

und 1 208 g Saccharose werden in 600 g Toluol bei Raumtemperatur vorgelegt. Durch zweimaliges Evakuieren und Wiederauffüllen des Reaktionsgefäßes mit Stickstoff wird der Luftsauerstoff entfernt. Nach Erwärmen auf 80 °C werden 67 g 50 %ige wäßrige Kalilauge zugegeben. Anschließend wird weiter erwärmt. Bei 100 bis 110 °C werden nun zu dem sehr gut rührbaren Gemisch bei einem Druck von 0,4 bis 0,6 bar 4 139 g Propylenoxid allmählich zudosiert. Je nach Erfordernis wird durch Kühlen oder Heizen des Reaktionsgemisches die Reaktionstemperatur in diesem Bereich gehalten. Nach beendeter Propylenoxidzugabe wird noch weitere 3 Stunden bei 100 bis 110 °C gerührt. Das alkoholische Polymerisat wird nach Zugabe von 600 g Wasser und 201 g 12,6 %iger wäßriger Schwefelsäure neutralisiert. Anschließend wird bei 70 bis 90 °C nach Zugabe von Filtrierhilfsmitteln (Zellstoffpulver und synthetisches Magnesiumsilikat) und eines Antioxidans (2,6-Di-tert.-butyl-p-kresol) das Wasser im Vakuum abdestilliert. Bei einem Wassergehalt von 0,9 % werden die abgeschiedenen Salze und die Filtrierhilfsmittel abfiltriert. Zur vollständigen Entfernung des Wassers wird das Filtrat anschließend bei 100 bis 105 °C im Vakuum ausdestilliert.

Das erhaltene Produkt hat die folgenden physikalischen Daten :

| | |
|---|---|
| Hydroxylzahl (mg KOH/g) | 449 |
| pH-Wert | 8,7 |
| Wassergehalt (%) | 0,1 |
| Viskosität bei 25 °C (mPas) | 27 400 |
| mittlere Hydroxylfunktionalität | 5,0 |

(Anmerkung :

Die in den Beispielen angegebenen Hydroxylzahlen wurden wie üblich erhalten durch Acylierung des Polyethers mit überschüssigem Phthalsäureanhydrid und Pyridin.

Zur Bestimmung der pH-Werte wurde als Lösungsmittel ein Gemisch von Methanol und Wasser im Volumenverhältnis 9 : 1 benutzt, wobei zur pH-Messung jeweils 10 ml des Polyethers und 100 ml des Lösungsmittels eingesetzt wurden. Gemessen wurde mit einer Einstab-Glaselektrode.)

### Beispiel 2

Nach dem in Beispiel 1 beschriebenen Verfahren wurde ein Polyether aus folgenden Materialien hergestellt :

764 g des Formits aus Beispiel 1
960,3 g Saccharose
600 g Toluol
68,4 g 50 %ige wäßrige Kalilauge
4 276 g Propylenoxid

Das erhaltene Produkt hatte folgende physikalische Daten :

| | |
|---|---|
| Hydroxylzahl (mg KOH/g) | 441 |
| pH-Wert | 8,1 |
| Wassergehalt (%) | 0,08 |
| Viskosität bei 25 °C (mPas) | 14 800 |
| mittlere Hydroxylfunktionalität | 4,7 |

Beispiel 3

480 g Formit aus Beispiel 1, 1 208 g Saccharose, 179 g Propylenglykol und 600 g Toluol werden bei Raumtemperatur vorgelegt. Durch zweimaliges Evakuieren und Wiederauffüllen des Reaktionsgefäßes mit Stickstoff wird der Luftsauerstoff entfernt. Nach Erwärmen auf 80 °C werden 65,3 g 50 %ige wäßrige Kalilauge zugegeben. Das gut rührbare Gemisch wird auf 100 °C erwärmt und bei einem Druck von 0,4 bis 0,6 bar und einer Temperatur von 100 bis 100 °C werden 4 133 g Propylenoxid allmählich zudosiert. Die weitere Reaktionsführung und die Aufarbeitung des Reaktionsgemisches erfolgt wie in Beispiel 1 beschrieben.
Das erhaltene Produkt hat folgende physikalische Daten :

| | |
|---|---|
| Hydroxylzahl (mg KOH/g) | 416 |
| pH-Wert | 9,3 |
| Wassergehalt (%) | 0,05 |
| Viskosität bei 25 °C (mPas) | 16 100 |
| mittlere Hydroxylfunktionalität | 4,5 |

Beispiel 4

Nach dem in Beispiel 1 beschriebenen Verfahren wurde ein Polyether aus folgenden Materialien hergestellt :
676 g eines Formits folgender Zusammensetzung :

| | |
|---|---|
| zweiwertige Alkohole | 37 Gew.-% |
| dreiwertige Alkohole | 17 Gew.-% |
| vierwertige Alkohole | 16 Gew.-% |
| fünfwertige Alkohole | 12 Gew.-% |
| sechswertige Alkohole | 13 Gew.-% |
| siebenwertige Alkohole und höherwertige Alkohole | 5 Gew.-% |
| (mittlere Hydroxylfunktionalität : 3) | |

1 208 g Saccharose, 700 g Toluol, 60 g 50 % wäßrige Kalilauge und 4 124 g Propylenoxid.
Das erhaltene Produkt hatte folgende physikalische Daten :

| | |
|---|---|
| Hydroxylzahl (mg KOH/g) | 425 |
| pH-Wert | 7,2 |
| Wassergehalt (%) | 0,03 |
| Viskosität bei 25 °C (mPas) | 11 400 |
| mittlere Hydroxylfunktionalität | 4,3 |

In den nachstehenden Anwendungsbeispielen 5 bis 19 wurden neben den erfindungsgemäßen, auf Saccharose/Formit gestarteten Polyethern folgende konventionelle Polyether eingesetzt :

Polyether A

Anlagerungsprodukt von Propylenoxid an einen Formit folgender Zusammensetzung :

| | |
|---|---|
| zweiwertige Alkohole | 1 Gew.-% |
| dreiwertige Alkohole | 4 Gew.-% |

| | |
|---|---|
| vierwertige Alkohole | 8 Gew.-% |
| fünfwertige Alkohole | 34 Gew.-% |
| sechswertige Alkohole | 38 Gew.-% |
| sieben- und höherwertige Alkohole | 15 Gew.-% |

(mittlere Hydroxylfunktionalität : 5,2).

Die Propoxylierung erfolgte nach dem in DE-OS 2 639 083 beschriebenen Verfahren. Hydroxylzahl des Polyethers : 550.

### Polyether B

Anlagerungsprodukt von Propylenoxid an eine Mischung aus 1 881 g Saccharose, 1 900 g 1,2-Propylenglykol und 36 g Wasser. Hydroxylzahl : 370 ; mittlere Hydroxylfunktionalität : 3.
Die Propoxylierung des obigen Startergemisches erfolgte nach dem in US-PS 3 941 769 beschriebenen Verfahren.

### Polyether C

Anlagerungsprodukt von Propylenoxid an einen Formit folgender Zusammensetzung :

| | |
|---|---|
| zweiwertige Alkohole | 36,6 Gew.-% |
| dreiwertige Alkohole | 16,4 Gew.-% |
| vierwertige Alkohole | 16,2 Gew.-% |
| fünfwertige Alkohole | 12,6 Gew.-% |
| sechswertige Alkohole | 12,8 Gew.-% |
| sieben- und höherwertige Alkohole | 5,4 Gew.-% |

(mittlere Hydroxylfunktionalität : 3,0).

Die Propoxylierung erfolgt nach dem in DE-OS 2 639 083 beschriebenen Verfahren.
Hydroxylzahl des Polyethers : 405,
mittlere Hydroxylfunktionalität : 3.

### Polyether D

Anlagerungsprodukt von Propylenoxid an ein Gemisch aus Saccharose und Glycerin ; hergestellt nach dem in US-PS 3.941.769 beschriebenen Verfahren.
Hydroxylzahl : 400,
mittlere Hydroxylfunktionalität : 4,2.

### Polyether E

Analog zu Polyether D ; gestartet auf einem Gemisch aus Saccharose und Glycerin.
Hydroxylzahl : 380,
mittlere Hydroxylfunktionalität : 4,5.

### Polyether F

Anlagerungsprodukt von Propylenoxid an ein Gemisch aus Saccharose und 1,2-Propylenglykol ; hergestellt analog zu Polyether D.
Hydroxylzahl : 430,
mittlere Hydroxylfunktionalität : 4,1.

### Polyether G

Analog zu Polyether D ; gestartet auf einem Gemisch aus Saccharose und Glycerin.
Hydroxylzahl : 480,
mittlere Hydroxylfunktionalität : 5,1.

### Polyether H

Propoxyliertes Diethylentriamin ; Hydroxylzahl : 440.

7

## Polyether I

Anlagerungsprodukt von Propylenoxid an ein Gemisch aus Sorbit und 1,2-Propylenglykol ; hergestellt analog zu Beispiel 1 von DE-OS 25 49 449.

Hydroxylzahl : 450,

mittlere Hydroxylfunktionalität : 2,8.

## Polyether J

Propoxyliertes 2,4-Toluylendiamin ; Hydroxylzahl : 370.

## Beispiel 5

95 g des Polyetherpolyols gemäß Beispiel 4, 1,5 g Wasser, 2 g eines Schaumstabilisators nach DE-OS 2 029 293, 3 g Dimethylcyclohexylamin und 38 g eines Fluorchlorkohlenwasserstoffs als Treibmittel werden gemischt.

Dieses Gemisch wird jeweils unter gleichen Bedingungen mit 129 g rohem 4,4'-Diisocyanatodiphenylmethan, welches durch Phosgenierung eines technischen Anilin-Formaldehyd-kondensates erhalten worden ist und einen NCO-Gehalt von 31 % aufweist, gut vermischt und in eine der nachstehend beschriebenen Formen eingetragen :

1. Papier (Test-) päckchen der Größe 20 × 20 × 14 cm zur Beurteilung der Start- und Abbindezeiten, der freien Rohdichte sowie Oberflächensprödigkeit nach dem Aushärten des Schaumstoffs.

2. Plattenform der Größe 22 × 22 × 6 cm, in der Sandwichplatten mit 1 mm starken Stahlblechdeckschichten zur Ermittlung der Mindestformverweilzeit geschäumt werden. Unter Mindestformverweilzeit wird dabei die Zeit verstanden, die die Platte in einer vorgeheizten Form verbleiben muß, um 30 Minuten nach dem Entformen keine Dickenquellung aufzuweisen. Aus den gemessenen Daten ergibt sich die Gesamtbeurteilung des Polyetherpolyols und gegebenenfalls der Polyetherpolyolkombination. Die erhaltenen Ergebnisse sind in der Tabelle 1 gemeinsam mit den weiteren erfindungsgemäßen Beispielen 6 bis 9 sowie den Vergleichsbeispielen 10 bis 19 zusammengestellt ; die Beurteilung der Oberflächensprödigkeit erfolgte dabei nach folgendem Zahlenschlüssel :

Note 1 = Oberfläche wird nicht spröde

Note 2 = Oberfläche wird nur für einen Zeitraum von 15 Minuten spröde

Note 3 = Oberfläche wird für einen Zeitraum von 15 bis 60 Minuten spröde

Note 4 = Oberfläche bleibt über 60 Minuten spröde

## Beispiel 6

95 g des Polyäthers nach Beispiel 1, 1,5 g Wasser, 2 g eines Schaumstabilisators nach DE-OS 2 029 293, 3,4 g Dimethylcyclohexylamin und 38 g eines Fluorchlorkohlenwasserstoffs als Treibmittel werden gemischt.

Dieses Gemisch wird unter den in Beispiel 5 angegebenen Bedingungen mit 141 g rohem 4,4'-Diisocyanatodiphenylmethan verschäumt. Die resultierenden Schaumstoffe werden analog zu Beispiel 5 geprüft und beurteilt.

## Beispiel 7

95 g des Polyäthers nach Beispiel 2, 1,5 g Wasser, 2 g eines Schaumstabilisators nach DE-OS 2 029 293, 3,4 g Dimethylcyclohexylamin und 38 g eines Fluorchlorkohlenwasserstoffs als Treibmittel werden gemischt.

Dieses Gemisch wird unter den Bedingungen, die in Beispiel 5 angegeben sind, mit 139 g rohem 4,4'-Diisocyanatodiphenylmethan verschäumt. Die resultierenden Schaumstoffe werden analog zu Beispiel 5 geprüft und beurteilt.

## Beispiel 8

95 g des Polyäthers nach Beispiel 3, 1,5 g Wasser, 2 g eines Schaumstabilisators nach DE-OS 2 029 293, 2,8 g Dimethylcyclohexylamin und 38 g eines Fluorchlorkohlenwasserstoffs als Treibmittel werden gemischt.

Dieses Gemisch wird unter den Bedingungen, die in Beispiel 5 angegeben sind, mit 131 g rohem 4,4'-Diisocyanatodiphenylmethan verschäumt. Die resultierenden Schaumstoffe werden analog zu Beispiel 5 geprüft und beurteilt.

0 037 010

## Beispiel 9

95 g des Polyetherpolyols nach Beispiel 4, 2,4 g Wasser, 2,0 g eines Schaumstabilisators nach der DE-OS 2 029 293, 2,6 g Dimethylcyclohexylamin und 35 g eines Fluorchlorkohlenwasserstoffs als Treibmittel werden gemischt.

Dieses·Gemisch wird unter den in Beispiel 5 angegebenen Bedingungen mit 142 g rohem 4,4'-Diisocyanatodiphenylmethan verschäumt. Die resultierenden Schaumstoffe werden analog zu Beispiel 5 geprüft und beurteilt.

## Beispiel 10 (Vergleichsbeispiel)

47,5 g Polyether A, 47,5 g Polyether B, 1,5 g Wasser, 2 g eines Schaumstabilisators nach der DE-OS 2 029 293, 3 g Dimethylcyclohexylamin und 38 g eines Fluorchlorkohlenwasserstoffs als Treibmittel werden gemischt.

Dieses Gemisch wird unter den Bedingungen, die in Beispiel 5 angegeben sind, mit 139 g rohem 4,4'-Diisocyanatodiphenylmethan verschäumt. Die resultierenden Schaumstoffe werden analog zu Beispiel 5 geprüft und beurteilt. Aus den Angaben der Tabelle 1 erkennt man die gegenüber erfindungsgemäßen Polyetherpolyolen schlechteren Eigenschaften. Nachteilig wirkt sich besonders die stärkere Oberflächensprödigkeit des entstandenen Schaumstoffes aus.

## Beispiel 11 (Vergleichsbeispiel)

47,5 g Polyetherpolyol A, 47,5 g Polyetherpolyol B, 1,5 g Wasser, 2 g eines Schaumstabilisators nach der DE-OS 2 029 293, 0,5 g N,N,N',N'',N''-Pentamethyldiethylentriamin, 2 g Dimethylcyclohexylamin und 38 g eines Fluorchlorkohlenwasserstoffs als Treibmittel werden vermischt.

Dieses Gemisch wird unter den in Beispiel 5 angegebenen Bedingungen mit 139 g rohem 4,4'-Diisocyanatodiphenylmethan verschäumt. Die resultierenden Schaumstoffe werden analog zu Beispiel 5 geprüft und beurteilt. Aus den Angaben der Tabelle 1 ergibt sich die Unterlegenheit gegenüber den erfindungsgemäßen Polyetherpolyolen. Nachteilig wirkt sich darüber hinaus eine grobere Zellstruktur aus.

## Beispiel 12 (Vergleichsbeispiel)

47,5 g Polyether A, 47,5 g Polyether C, 1,5 g Wasser, 2 g eines Schaumstabilisators nach DE-OS 2 029 293, 2,9 g Dimethylcyclohexylamin und 38 g eines Fluorchlorkohlenwasserstoffs als Treibmittel werden vermischt.

Dieses Gemisch wird unter den in Beispiel 5 angegebenen Bedingungen mit 142 g rohem 4,4'-Diisocyanatodiphenylmethan verschäumt. Die resultierenden Schaumstoffe werden analog zu Beispiel 5 geprüft und beurteilt. Aus den Angaben der Tabelle 1 ergibt sich die Unterlegenheit gegenüber den erfindungsgemäßen Polyetherpolyolen. Nachteilig wirkt sich darüber hinaus auch eine grobe Zellstruktur aus.

## Beispiel 13 (Vergleichsbeispiel)

47,5 g Polyether A, 47,5 g Polyether C, 2 g Wasser, 2 g eines Schaumstabilisators nach DE-OS 2 029 293, 2,6 g Dimethylcyclohexylamin und 35 g eines Fluorchlorkohlenwasserstoffs als Treibmittel werden vermischt.

Dieses Gemisch wird unter den Bedingungen, die in Beispiel 5 angegeben sind, mit 142 g rohem 4,4'-Diisocyanatodiphenylmethan verschäumt. Die resultierenden Schaumstoffe werden analog zu Beispiel 5 geprüft und beurteilt. Aus den Angaben der Tabelle 1 ergibt sich die Unterlegenheit gegenüber den erfindungsgemäßen Polyetherpolyolen. Nachteilig wirkt sich insbesondere die stärkere Oberflächensprödigkeit des entstehenden Schaumstoffes aus.

## Beispiel 14 (Vergleichsbeispiel)

95 g Polyether D, 1,5 g eines Schaumstabilisators nach der DE-OS 2 029 293, 1,4 g Wasser, 0,5 g N,N,N',N'',N''-Pentamethyldiethylentriamin, 1,5 g Dimethylcyclohexylamin und 38 g eines Fluorchlorkohlenwasserstoffs als Treibmittel werden vermischt.

Dieses Gemisch wird wie oben mit 130 g rohem 4,4'-Diisocyanatodiphenylmethan verschäumt. Die resultierenden Schaumstoffe werden analog zu Beispiel 5 geprüft und beurteilt. Aus den Angaben der Tabelle 1 ergibt sich die Unterlegenheit gegenüber den erfindungsgemäßen Polyetherpolyolen. Nachteilig wirkt sich besonders die längere Formverweilzeit aus.

9

### Beispiel 15 (Vergleichsbeispiel)

95 g Polyether E, 2,1 g Wasser, 1,5 g eines Schaumstabilisators nach der DE-OS 2 029 293, 3,5 g Dimethylcyclohexylamin und 38 g eines Fluorchlorkohlenwasserstoffs als Treibmittel werden vermischt. Dieses Gemisch wird wie oben beschrieben mit 140 g rohem 4,4'-Diisocyanatodiphenylmethan verschäumt. Die resultierenden Schaumstoffe werden analog zu Beispiel 5 geprüft und beurteilt.

Aus den Angaben der Tabelle 1 ergibt sich die Unterlegenheit gegenüber den erfindungsgemäßen Polyetherpolyolen. Nachteilig wirken sich besonders der hohe Aminanteil sowie die längere Formverweilzeit aus.

### Beispiel 16 (Vergleichsbeispiel)

95 g Polyether F, 2,1 g Wasser, 1,9 g eines Schaumstabilisators nach der DE-OS 2 029 293, 0,7 g N,N, N',N'',N''-Pentamethyldiethylentriamin und 36 g eines Fluorchlorkohlenwasserstoffs als Treibmittel werden vermischt.

Dieses Gemisch wird wie oben beschrieben mit 150 g rohem 4,4'-Diisocyanatodiphenylmethan verschäumt. Die resultierenden Schaumstoffe werden analog zu Beispiel 5 geprüft und beurteilt. Aus den Angaben der Tabelle 1 ergibt sich die Unterlegenheit gegenüber den erfindungsgemäßen Polyetherpolyolen. Nachteilig wirken sich besonders die über längere Zeit spröde Oberfläche des Schaumstoffs sowie die schlechte Haftung an den Deckschichten aus.

### Beispiel 17 (Vergleichsbeispiel)

75 g Polyether G, 20 g Polyether H, 1,5 g Wasser, 1,5 g eines Schaumstabilisators nach der DE-OS 2 029 293, 0,6 g Dimethylethanolamin, 0,9 g N,N,N'-N'',N''-Pentamethyldiethylentriamin, 1,2 g Dimethylcyclohexylamin und 38 g eines Fluorchlorkohlenwasserstoffs als Treibmittel werden vermischt.

Dieses Gemisch wird unter den oben angegebenen Bedingungen mit 133 g rohem 4,4'-Diisocyanatodiphenylmethan verschäumt. Die resultierenden Schaumstoffe werden analog zu Beispiel 5 geprüft und beurteilt. Aus den Angaben der Tabelle 1 ergibt sich die Unterlegenheit gegenüber den erfindungsgemäßen Polyetherpolyolen. Nachteilig wirken sich besonders die über längere Zeit spröde Oberfläche sowie die lange Formverweilzeit aus.

### Beispiel 18 (Vergleichsbeispiel)

75 g Polyether I, 20 g Polyether J, 2 g Wasser, 1,5 g eines Schaumstabilisators nach der DE-OS 2 029 293, 2 g Dimethylcyclohexylamin und 35 g eines Fluorchlorkohlenwasserstoffs als Treibmittel werden gemischt.

Dieses Gemisch wird unter den oben angegebenen Bedingungen mit 140 g rohem 4,4'-Diisocyanatodiphenylmethan verschäumt. Die resultierenden Schaumstoffe werden analog zu Beispiel 5 geprüft und beurteilt. Aus den Angaben der Tabelle 1 ergibt sich die Unterlegenheit gegenüber den erfindungsgemäßen Polyetherpolyolen. Nachteilig wirken sich besonders die über einen langen Zeitraum spröde Oberfläche des Schaumstoffs sowie die längere Formverweilzeit aus.

### Beispiel 19 (Vergleichsbeispiel)

95 g Polyether I, 1,9 g Wasser, 1,5 g eines Schaumstabilisators nach der DE-OS 2 029 293, 2,5 g Dimethylcyclohexylamin und 33 g eines Fluorchlorkohlenwasserstoffs als Treibmittel werden gemischt.

Dieses Gemisch wird unter den oben angegebenen Bedingungen mit 145 g rohem 4,4'-Diisocyanatodiphenylmethan verschäumt. Die resultierenden Schaumstoffe werden analog zu Beispeil 5 geprüft und beurteilt. Aus den Angaben der Tabelle 1 ergibt sich die Unterlegenheit gegenüber den erfindungsgemäßen Polyetherpolyolen. Nachteilig wirkt sich besonders die längere Formverweilzeit aus.

## Tabelle 1

| Beispiel | Erfindungsgemäß | | | | | Vergleichsbeispiele | | | | | | | | | |
|---|---|---|---|---|---|---|---|---|---|---|---|---|---|---|---|
| | 5 | 6 | 7 | 8 | 9 | 10 | 11 | 12 | 13 | 14 | 15 | 16 | 17 | 18 | 19 |
| **1. Testpäckchen** | | | | | | | | | | | | | | | |
| Startzeit (sec.) | 18 | 19 | 18 | 18 | 18 | 20 | 13 | 22 | 20 | 9 | 14 | 10 | 11 | 15 | 15 |
| Abbindezeit (sec.) | 100 | 102 | 99 | 102 | 100 | 100 | 100 | 100 | 100 | 100 | 100 | 100 | 80 | 100 | 90 |
| freie Rohdichte (KG/m³) DIN 53420 | 22,0 | 23,6 | 22,8 | 23,4 | 21,2 | 22,1 | 21,5 | 21,6 | 22,1 | 22,4 | 21,2 | 22,0 | 21,9 | 20,5 | 25,0 |
| Oberflächen-sprödigkeit | 1 | 1 | 1 | 1 | 1 | 2 | 1 | 1 | 2 | 3 | 1 | 4 | 3 | 2 | 3 |
| Haftfestig-keit | 0,28 | 0,29 | 0,29 | 0,28 | 0,27 | 0,21 | 0,23 | 0,24 | 0,22 | 0,19 | 0,20 | 0,15 | 0,18 | 0,17 | 0,18 |
| **2. Plattenform** | | | | | | | | | | | | | | | |
| Mindestformver-weilzeit (min.) | 4 | 4 | 4 | 4 | 4 | 4,5 | 4,5 | 4,5 | 4,5 | 5,5 | 5,5 | 5 | 5 | 5,5 | 5 |

## Ansprüche

1. Verfahren zur Herstellung von Polyetherpolyolen mit einer mittleren Hydroxylfunktionalität von mindestens 3 und einer Hydroxylzahl von 28 bis 1 000 durch Alkoxylierung eines Startergemisches aus Saccharose, einem niedermolekularen Polyol und gegebenenfalls Wasser, dadurch gekennzeichnet, daß als Startermaterial ein Gemisch aus

a) 20 bis 80 Gew.-%, bezogen auf die Summe aus a) und b), an Saccharose und

b) 80 bis 20 Gew.-%, bezogen auf die Summe aus a) und b), an Formit mit einer mittleren Hydroxylfunktionalität von mindestens 3

eingesetzt wird.

2. Verfahren nach Anspruch 1, dadurch gekennzeichnet, daß als Startermaterial ein Gemisch aus

a) 40 bis 75 Gew.-%, bezogen auf die Summe aus a) und b), an Saccharose und

b) 60 bis 25 Gew.-%, bezogen auf die Summe aus a) und b), an Formit

eingesetzt wird.

3. Verfahren nach Ansprüchen 1 und 2, dadurch gekennzeichnet, daß der Formit eine mittlere Hydroxylfunktionalität von 3,3 bis 5,7 aufweist.

4. Verfahren nach Ansprüchen 1 bis 3, dadurch gekennzeichnet, daß das Startermaterial zusätzlich Wasser in einer Menge von 0,5 bis 3 Gew.-%, bezogen auf die Gesamtmenge von Saccharose und Formit, enthält.

5. Verfahren nach Ansprüchen 1 bis 4, dadurch gekennzeichnet, daß das Startermaterial zusätzlich 2 bis 20 Gew.-%, bezogen auf die Gesamtmenge von Saccharose und Formit, eines niedermolekularen Polyols und/oder Monoamins und/oder Polyamins enthält.

6. Verfahren nach Ansprüchen 1 bis 5, dadurch gekennzeichnet, daß das Startermaterial eine mittlere Funktionalität gegenüber Alkylenoxiden von 4 bis 7 aufweist.

7. Verfahren zur Herstellung von gegebenenfalls geschäumten Polyurethankunststoffen durch Umsetzung von

A. Polyisocyanaten mit

B. Polyetherpolyolen auf Basis von Saccharose und einem niedermolekularen Polyol, gegebenenfalls

C. weiteren niedermolekularen und/oder höhermolekularen Verbindungen mit gegenüber Isocyanaten reaktiven Wasserstoffatomen, gegebenenfalls in Gegenwart von

D. Aktivatoren, Treibmitteln und weiteren an sich bekannten Zusatzstoffen,

dadurch gekennzeichnet, daß als Komponente B) gemäß Ansprüchen 1 bis 6 hergestellte Polyether eingesetzt werden.

## Claims

1. A process for the production of polyether polyols having an average hydroxyl functionality of at least 3 and a hydroxyl number of 28 to 1000 by alkoxylating a starting mixture of sucrose, a low molecular weight polyol and, optionally, water, characterised in that as the starting material, a mixture of :

a) 20 to 80 %, by weight based on the sum of a) and b), of sucrose, and

b) 80 to 20 %, by weight, based on the sum of a) and b), of formitol having an average hydroxyl functionality of at least 3,

is used.

2. A process according to claim 1, characterised in that, as the starting material, a mixture of :

a) 40 to 75 %, by weight, based on the sum of a) and b), of sucrose, and

b) 60 to 25 %, by weight, based on the sum of a) and b), of formitol,

is used.

3. A process according to claims 1 and 2, characterised in that the formitol has an average hydroxyl functionality of 3.3 to 5.7.

4. A process according to claims 1 to 3, characterised in that the starting material also contains water in a quantity of 0.5 to 3 %, by weight, based on the total quantity of sucrose and formitol.

5. A process according to claims 1 to 4, characterised in that the starting material also contains 2 to 20 %, by weight, based on the total quantity of sucrose and formitol, of a low molecular weight polyol and/or mono- and/or poly-amine.

6. A process according to claims 1 to 5, characterised in that the starting material has an average functionality in respect of alkylene oxides of 4 to 7.

7. A process for the production of optionally foamed polyurethane plastics by the reaction of

A. polyisocyanates with

B. polyether polyols based on sucrose and a low molecular weight polyol, and optionally,

C. other low molecular weight and/or higher molecular weight compounds having isocyanate-reactive hydrogen atoms, optionally in the presence of

D. activators, blowing agents and other known additives,

characterised in that polyethers produced according to claims 1 to 6 are used as component B.

## Revendications

1. Procédé de fabrication de polyétherpolyols ayant une fonctionnalité hydroxyle moyenne d'au moins 3 et un indice d'hydroxyle de 28 à 1 000 par alcoxylation d'un mélange initiateur de saccharose, d'un polyol à poids moléculaire inférieur et éventuellement d'eau, caractérisé en ce qu'on utilise comme matière initiatrice un mélange

a) de 20 à 80 % en poids, par rapport à la somme de a) et de b) de saccharose et

b) de 80 à 20 % en poids, par rapport à la somme de a) et de b), de formitol ayant une fonctionnalité hydroxyle moyenne d'au moins 3.

2. Procédé selon la revendication 1, caractérisé en ce qu'on utilise comme matière initiatrice un mélange

a) de 40 à 75 % en poids, par rapport à la somme de a) et de b) de saccharose et

b) de 60 à 25 % en poids, par rapport à la somme de a) et de b) de formitol.

3. Procédé selon les revendications 1 et 2, caractérisé en ce que le formitol présente une fonctionnalité hydroxyle moyenne de 3,3 à 5,7.

4. Procédé selon les revendications 1 à 3, caractérisé en ce que la matière initiatrice contient supplémentairement de l'eau en une quantité de 0,5 à 3 % en poids par rapport à la quantité totale de saccharose et de formitol.

5. Procédé selon les revendications 1 à 4, caractérisé en ce que la matière initiatrice contient supplémentairement 2 à 20 % en poids, par rapport à la quantité totale de saccharose et de formitol, d'un polyol à poids moléculaire inférieur et/ou d'une monoamine et/ou d'une polyamine.

6. Procédé selon les revendications 1 à 5, caractérisé en ce que la matière initiatrice présente une fonctionnalité moyenne envers les oxydes d'alcoylène de 4 à 7.

7. Procédé de fabrication de matières synthétiques de polyuréthanes éventuellement mousseuses par réaction

A. de polyisocyanates avec

B. des polyétherpolyols à base de saccharose et d'un polyol à poids moléculaire inférieur,

C. éventuellement d'autres composés à poids moléculaire inférieur et/ou à poids moléculaire élevé avec atomes d'hydrogène réactifs envers les isocyanates, éventuellement en présence

D. d'activateurs, d'agents expanseurs et autres additifs connus en eux-mêmes,

caractérisé en ce qu'en tant que composant B) on utilise des polyéthers préparés selon les revendications 1 à 6.